# EUROPÄISCHE PATENTANMELDUNG

(11) **EP 4 725 832 A1**
(43) Veröffentlichungstag der Anmeldung: **15.04.2026**
(21) Anmeldenummer: 24205301.5
(22) Anmeldetag: 08.10.2024
(51) Int. Cl.: B64C 11/06

(54) **VERSTELLPROPELLER-ANORDNUNG MIT PROPELLERNABE**

(71) Anmelder: MTP-Propeller Entwicklung GmbH, 94348 Atting (DE)
(72) Erfinder: MÜHLBAUER, Gerd, 94360 Mitterfels (DE); ALBRECHT, Martin, 94315 Straubing (DE)
(74) Vertreter: advotec.

(57) **Zusammenfassung**

Die Erfindung betrifft eine Verstellpropeller-Anordnung für ein Luft-, Land- oder Wasserfahrzeug, mit einem Propeller (14, 14'), umfassend eine Propellernabe (28) und mindestens ein Propellerblatt (30), das zur Einstellung eines Einstellwinkels drehbar an der Propellernabe (28) gelagert ist, wobei das Propellerblatt (30) einen Lagerfuß (34, 34') umfasst und die Propellernabe (28) eine Lageraufnahme (32) für den Lagerfuß (34, 34') des Propellerblatts (30) umfasst. Der Lagerfuß (34, 34') des Propellerblatts (30) stützt sich über ein erstes Kugellager (40) und ein gegenüber dem ersten Kugellager (40) axial versetztes zweites Kugellager (42) an der Propellernabe (28) ab. Die Propellernabe (28) ist im Bereich der Lageraufnahme (32) aus einem Aluminiumwerkstoff gefertigt und die beiden Kugellager (40, 42) haben einen gemeinsamen Lageraußenring (44), der in die Lageraufnahme (32) eingesetzt ist.

## Beschreibung

Die Erfindung betrifft eine Verstellpropeller-Anordnung für ein Luft-, Land- oder Wasserfahrzeug gemäß dem Oberbegriff des Patentanspruchs 1.

Eine derartige Propelleranordnung ist aus der Druckschrift EP 3 305 657 B1 bekannt und umfasst eine Propellernabe, an der mehrere Propellerblätter drehbar gelagert sind, so dass ein Einstellwinkel bzw. ein Blattwinkel der Propellerblätter einstellbar ist. Der Einstellwinkel der Propellerblätter ist in Abhängigkeit von der jeweiligen Betriebssituation des Flugzeugs anpassbar. Die Propellerblätter umfassen jeweils eine einen Lagerfuß bildende Blattwurzel, die in einer jeweiligen, korrespondierenden Lageraufnahme der Propellernabe drehbar gelagert ist. Die Blattwurzel ist mit einer Antriebseinrichtung verbunden, die die Drehstellung des Lagerfußes bzw. den Einstellwinkel des Propellerblatts vorgibt, und ist über ein Kugellager in der betreffenden Aufnahme der Propellernabe gelagert. Die aus der Druckschrift EP 3 305 657 B1 bekannte Konstruktion genügt aber insbesondere im Falle von großen Propellerblättern nicht den Anforderungen hinsichtlich Gewicht und Stabilität.

Der Erfindung liegt die Aufgabe zugrunde, eine gemäß der einleitend genannten Art ausgebildete Verstellpropeller-Anordnung zu schaffen, die sich gegenüber dem oben beschriebenen Stand der Technik durch ein niedriges Gewicht und durch eine verbesserte Lagerung des Propellerblatts auszeichnet.

Diese Aufgabe ist erfindungsgemäß durch die Verstellpropeller-Anordnung mit den Merkmalen des Patentanspruchs 1 gelöst.

Gemäß der Erfindung wird also eine Verstellpropeller-Anordnung für ein Luft-, Land- oder Wasserfahrzeug vorgeschlagen, die einen Propeller umfasst, der eine Propellernabe und mindestens ein Propellerblatt umfasst, das zur Einstellung eines Einstellwinkels drehbar an der Propellernabe gelagert ist. Das Propellerblatt hat einen insbesondere eine Blattwurzel bildenden Lagerfuß. Die Propellernabe hat eine Lageraufnahme für den Lagerfuß des Propellerblatts. Der Lagerfuß des Propellerblatts ist über ein erstes Kugellager und über ein gegenüber dem ersten Kugellager bezogen auf die Drehachse des Propellerblatts an der Propellernabe axial versetztes zweites Kugellager an der Propellernabe gelagert. Die Propellernabe ist zumindest im Bereich der Lageraufnahme aus einem Aluminiumwerkstoff gefertigt. Die beiden Kugellager haben einen gemeinsamen Lageraußenring, der in die Lageraufnahme eingesetzt ist.

Die Kugeln der Kugellager rollen also bei einer Betätigung bzw. einem Verstellen des Propellerblatts gegenüber der Propellernabe an dem gemeinsamen Lageraußenring ab, der in die Propellernabe eingesetzt ist. Diese zeichnet sich aufgrund des Aluminiumwerkstoffs durch ein geringes Eigengewicht aus. Der gemeinsame Lageraußenring kann aus Stahl gefertigt sein und insbesondere induktiv gehärtete Lagerflächen für die Kugeln der Kugellager aufweisen. Der gemeinsame Lageraußenring kann schwimmend in der Lageraufnahme der Propellernabe gelagert sein.

Mit einer aus Aluminium gefertigten Nabe, die insbesondere ein Frästeil oder ein Druckgussteil sein kann, lassen sich erhebliche Gewichtseinsparungen bei der Verstellpropeller-Anordnung erreichen. Beispielsweise kann die Gewichtseinsparung bei einer Verstellpropeller-Anordnung, die sechs Propellerblätter umfasst, die an der Propellernabe drehbar gelagert sind, Gewichtseinsparungen von mindestens 15 bis 25 kg erreichen. Zudem lassen sich durch Einsetzen einer aus einem Aluminiumwerkstoff gefertigten Propellernabe die Herstellungskosten der Verstellpropeller-Anordnung im Vergleich zu den Kosten der Herstellung einer Verstellpropeller-Anordnung mit einer aus Stahl gefertigten Propellernabe erheblich senken.

Um das Propellerblatt gegenüber der Propellernabe verdrehen zu können, ist der Lagerfuß des Propellerblatts mit einer Antriebseinrichtung verbunden, die hydraulisch, elektrisch und/oder mechanisch ausgebildet sein kann. Mittels der Antriebseinrichtung kann in Abhängigkeit von der Betriebssituation des betreffenden Fahrzeugs der Einstellwinkel bzw. der Blattwinkel des Propellerblatts vorgegeben werden. Des Weiteren kann die Einstellvorrichtung mit einem Steuergerät des betreffenden Luft-, Land- oder Wasserfahrzeugs verbunden sein, das eine so genannte FADEC (Full Authority Digital Engine Control) sein kann.

Um in axialer Richtung eine möglichst spielfreie Lagerung des Propellerblatts in der betreffenden Lageraufnahme der Propellernabe zu erreichen, weist der Lagerfuß des Propellerblatts bei einer speziellen Ausführungsform der Verstellpropeller-Anordnung nach der Erfindung eine erste Lagerringnut, in der sich das erste Kugellager abstützt, und eine zweite Lagerringnut auf, in der sich das zweite Kugellager abstützt.

Um das Gesamtgewicht der Verstellpropeller-Anordnung nach der Erfindung noch weiter zu senken, ist der Lagerfuß des Propellerblatts bei einer speziellen Ausführungsform ebenfalls aus einem Aluminiumwerkstoff gefertigt.

Im Falle einer Fertigung des Lagerfußes aus einem Aluminiumwerkstoff kann es vorteilhaft sein, dass für das erste Kugellager in der ersten Lagerringnut ein Lagerinnenring angeordnet ist und für das zweite Kugellager in der zweiten Lagerringnut ein weiterer Lagerinnenring angeordnet ist. Die Lagerinnenringe können jeweils aus Stahl gefertigt sein und gehärtete, insbesondere induktiv gehärtete Lagerflächen für die Kugeln der Kugellager aufweisen.

Um die Lagerinnenringe der beiden Kugellager in einfacher Weise montieren zu können, umfassen diese bei einer bevorzugten Ausführungsform der Verstellpropeller-Anordnung nach der Erfindung jeweils mindestens zwei Ringsegmente. Beispielsweise erstrecken sich die beiden Ringsegmente jeweils über 180°.

Hingegen kann der gemeinsame Lageraußenring der beiden Kugellager ein geschlossener Ring sein, der bei der Montage zusammen mit dem Lagerfuß in die Lageraufnahme der Propellernabe eingeführt wird.

Wenn der Lagerfuß aus Stahl gefertigt ist, können die Kugeln der Kugellager innerhalb der beiden Lagerringnuten jeweils an einer Lagerfläche abrollen, welche direkt von dem Lagerfuß gebildet ist und welche vorzugsweise gehärtet, insbesondere induktiv gehärtet ist. Der Lagerfuß bildet dann also einen gemeinsamen Lagerinnenring der beiden Kugellager, wobei die Lagerringnuten der beiden Kugellager jeweils eine Lagerfläche bilden können, die induktiv gehärtet ist. Bei dieser Ausführungsform kann also auf separate Lagerinnenringe für die Kugellager verzichtet werden. Vielmehr bildet der Werkstoff des Lagerfußes selbst die Lagerflächen für die Kugeln der beiden Kugellager aus.

Um die Kugellager sicher in der Lageraufnahme anordnen zu können und das erste Kugellager möglichst spielfrei in Axialrichtung ausbilden zu können, ist es vorteilhaft, wenn das erste Kugellager der Verstellpropeller-Anordnung nach der Erfindung einen Stützaußenring, das heißt einen weiteren Lageraußenring umfasst, der in die Lageraufnahme eingesetzt ist. In diesem Falle rollen die Kugeln des ersten Kugellagers mithin an Lagerflächen von zwei Außenringen, das heißt an der Lagerfläche des Stützaußenrings und an der zugeordneten Lagerfläche des gemeinsamen Lageraußenrings ab. Der Stützaußenring ist vorzugsweise aus einem Stahlwerkstoff gefertigt und kann eine insbesondere induktiv gehärtete Lagerfläche für die Kugeln des ersten Kugellagers ausbilden.

Die beiden Kugellager können jeweils einen Lagerkäfig für die Kugeln haben oder auch käfigfrei ausgebildet sein.

Weitere Vorteile und vorteilhafte Ausgestaltungen des Gegenstandes der Erfindung sind der Beschreibung, der Zeichnung und den Patentansprüchen entnehmbar. In den Rahmen der Erfindung fallen sämtliche Kombinationen aus mindestens zwei in der Beschreibung, den Ansprüchen und/oder den Figuren offenbarten Merkmalen, das heißt jedes gezeigte Merkmal kann für sich unabhängig von den im jeweiligen Zusammenhang genannten weiteren Merkmalen und/oder Konkretisierungen Teil des beanspruchten Gegenstands sein.

Ausführungsbeispiele der Verstellpropeller-Anordnung nach der Erfindung sind in der Zeichnung schematisch vereinfacht dargestellt und werden in der nachfolgenden Beschreibung näher erläutert. Es zeigt:
- Fig. 1: eine Überblicksdarstellung einer Propelleranordnung eines Flugzeugs;
- Fig. 2: einen Schnitt durch einen Propeller der Propelleranordnung entlang der Linie II-II in Fig. 1;
- Fig. 3: einen Schnitt durch den Propeller im Bereich eines Lagerfußes eines Propellerblatts;
- Fig. 4: einen Schnitt durch den Propeller im Bereich eines Kugellagers zur Lagerung eines Propellerblatts an einer Propellernabe;
- Fig. 5: einen Fig. 2 entsprechenden Schnitt durch eine alternative Ausführungsform eines Propellers einer Propelleranordnung;
- Fig. 6: einen Fig. 3 entsprechenden Schnitt durch die alternative Ausführungsform eines Propellers.

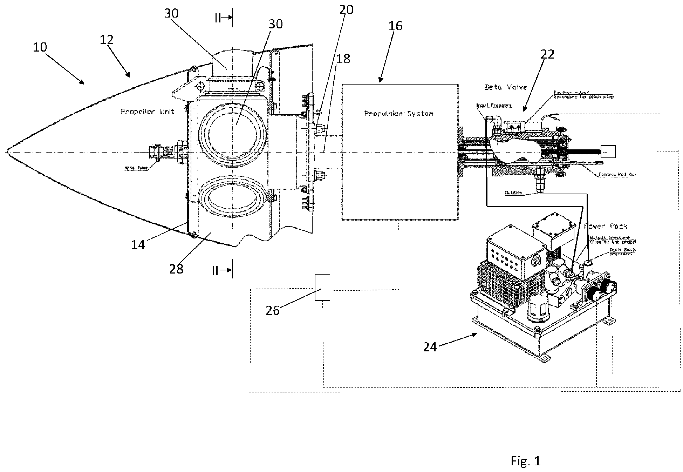

In Figur 1 ist in stark schematisierter Weise eine Propelleranordnung 10 für ein Flugzeug, d.h. für ein Luftfahrzeug dargestellt. Die Propelleranordnung 10 umfasst eine Propellereinheit 12, welche einen Propeller 14 aufweist. Des Weiteren umfasst die Propelleranordnung 10 ein Triebwerk 16, das einen Verbrennungsmotor oder auch einen Elektromotor umfassen kann und das den Propeller 14 über eine Antriebswelle 18 drehend antreiben kann. Zur Befestigung an dem Flugzeug weist die Propellereinheit 12 einen Befestigungsflansch 20 auf.

Um den Propeller 14 bzw. deren Propellerblätter 30 hydraulisch verstellen zu können, umfasst die Propelleranordnung 10 eine Drucksteuereinheit 22 sowie eine Pumpeneinheit 24, welche für die Drucksteuereinheit 22 ein hydraulisches Fluid mit einem Basisdruck bereitstellt. Zudem ist eine elektronische Steuereinrichtung 26 vorgesehen, die beispielsweise von einer sogenannten FADEC (Full Authority Digital Engine Control) gebildet sein kann.

Der Propeller 14 umfasst eine Propellernabe 28, an dem im vorliegenden Fall sechs Propellerblätter 30 verdrehbar gelagert sind. Zur Lagerung der Propellerblätter 30 weist die Propellernabe 28 sechs Lageraufnahmen 32 auf, in denen jeweils ein eine Blattwurzel darstellender Lagerfuß 34 des betreffenden Propellerblatts 30 über eine Lagereinrichtung 35 um eine Achse Y drehbar gelagert ist.

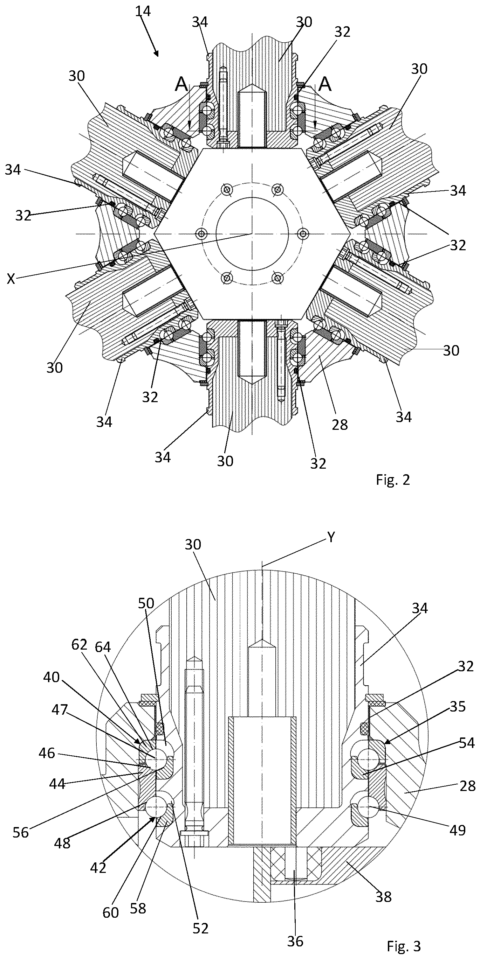

Die Lagerfüße 34 weisen, wie Figur 3 zu entnehmen ist, an ihren bezogen auf eine

Drehachse X des Propellers 14 radial nach innen weisenden Stirnseite jeweils einen Verstellzapfen 36 auf, der in eine korrespondierende Ausnehmung eines Gleitsteins 38 eingreift, welcher mit einer nicht näher dargestellten Kolbeneinheit verbunden ist, welche von der Drucksteuereinheit 22 betätigbar ist. Damit ist es möglich, die Propellerblätter 30 hinsichtlich ihres Einstellwinkels zwischen einer sogenannten Segelflugstellung und einer maximalen Umkehrschubstellung hydraulisch zu verstellen. Die Verstellung erfolgt über eine Änderung eines Hydraulikdrucks bzw. Regeldrucks in dem Druckraum.

Die Propellernabe 28 ist aus einem Aluminiumwerkstoff gefertigt und stellt ein Frästeil oder ein Druckgussteil dar.

Die Lagerfüße 34 der Propellerblätter 30 sind ebenfalls jeweils aus einem Aluminiumwerkstoff gefertigt, wobei sie jeweils ein Frästeil oder ein Druckgussteil darstellen.

Die Lagereinrichtungen 35 zur drehbaren Lagerung der Propellerblätter 30 in den Lageraufnahmen 32 der Propellernabe 28 umfassen jeweils ein erstes Kugellager 40 und ein zweites Kugellager 42, das bezogen auf die Drehachse Y in axialer Richtung gegenüber dem ersten Kugellager 40 in Richtung der Drehachse X des Propellers 14 versetzt ist. Die beiden Kugellager 40 und 42 umfassen einen gemeinsamen Lagerau-ßenring 44, der mit seiner Umfangsfläche zumindest bereichsweise an der Umfangsfläche der Lageraufnahmen 32 der Propellernabe 28 anliegt und der eine erste Lagerfläche 46 für die Kugeln 47 des ersten Kugellagers 40 und eine zweite Lagerfläche 48 für die Kugeln 49 des zweiten Kugellagers 42 ausbildet. Der aus Stahl gefertigte Lageraußenring 44 ist zumindest im Bereich der Lagerflächen 46 und 48, an denen die Kugeln 47 und 49 der Kugellager 40 und 42 abrollen, induktiv gehärtet.

Des Weiteren sind an den Lagerfüßen 34 der Propellerblätter 30 jeweils eine erste Lagerringnut 50 für das erste Kugellager 40 und eine zweite Lagerringnut 52 für das zweite Kugellager 42 ausgeformt. In der ersten Lagerringnut 50 ist ein Lagerinnenring 54 des ersten Kugellagers 40 aufgenommen, welcher eine Lager- bzw. Abrollfläche 56 für die Kugeln 47 des ersten Kugellagers 40 ausbildet. In der zweiten Lagerringnut 52 ist ein Lagerinnenring 58 aufgenommen, der eine Lager- bzw. Abrollfläche 60 für die Kugeln 49 des zweiten Kugellagers 42 bildet.

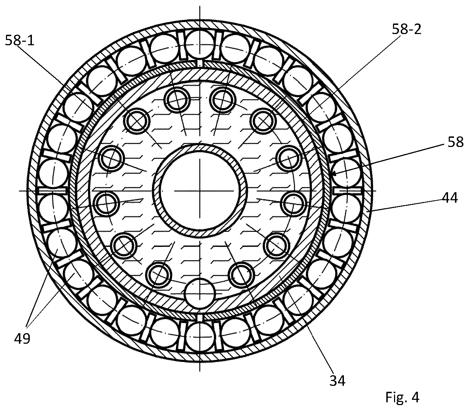

Wie insbesondere Figur 4 anhand des Lagerinnenrings 58 zu entnehmen ist, sind die Lagerinnenringe 54 und 58 jeweils aus zwei Ringsegmenten 58-1 und 58-2 zusammengesetzt, die sich jeweils über 180° erstrecken. Die Lagerinnenringe 50 und 58 sind jeweils aus Stahl gefertigt, wobei die Abrollflächen 56 und 60 für die Kugeln 47 und 49 der beiden Kugellager 40 und 42 induktiv gehärtet sind.

Die Lagereinrichtungen 35 für die Propellerblätter 30 umfassen jeweils einen Stützau-ßenring 62, der in die betreffende Lageraufnahme 32 der Propellernabe 28 eingesetzt ist und der ebenfalls eine Abrollfläche 64 für die Kugeln 47 des ersten Kugellagers 40 bildet. Zumindest im Bereich der Abrollfläche 64 ist der aus Stahl gefertigte Stützau-ßenring 62 induktiv gehärtet.

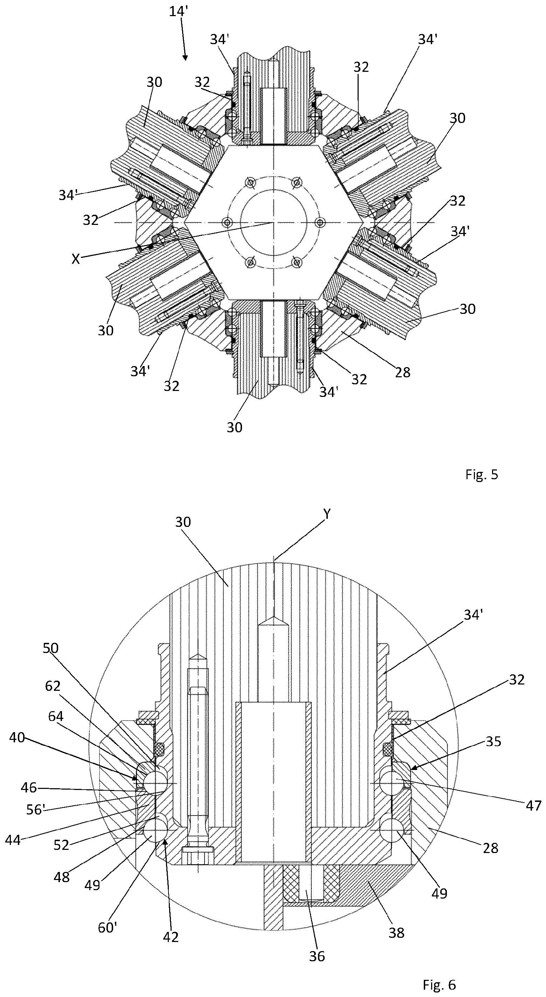

Anhand der Figuren 5 und 6 ist ein Propeller 14' dargestellt, der im Wesentlichen dem anhand der Figuren 1 bis 4 dargestellten Propeller entspricht, sich von diesem aber dadurch unterscheidet, dass die Propellerblätter 10 jeweils einen Lagerfuß bzw. Blattfuß 34' aufweisen, der aus Stahl gefertigt ist. Der Lagerfuß 34' umfasst an seiner Umfangsfläche eine erste Lagerringnut 50 und eine zweite Lagerringnut 52. Die Lagerringnuten 50 und 52 formen ohne zusätzliche Lagerinnenringe jeweils eine Abrollfläche 56' bzw. 60' für die Kugeln 47 des ersten Kugellagers 40 und eine Abrollfläche 60' für die Kugeln 49 des zweiten Kugellagers 42 aus. Der Lagerfuß 34' bildet also einen gemeinsamen Lagerinnenring der beiden Kugellager 40 und 42. Im Bereich der Abrollflächen 56' und 60' ist der Lagerfuß 34' induktiv gehärtet.

Im Übrigen entspricht der Propeller 14' demjenigen nach den Figuren 1 bis 4, weswegen zur Vermeidung von Wiederholungen auf die diesbezügliche Beschreibung verwiesen wird.

### Bezugszeichenliste

- 10: Propelleranordnung
- 12: Propellereinheit
- 14, 14': Propeller
- 16: Triebwerk
- 18: Antriebswelle
- 20: Befestigungsflansch
- 22: Drucksteuereinheit
- 24: Pumpeneinheit
- 26: Steuereinrichtung
- 28: Propellernabe
- 30: Propellerblatt
- 32: Lageraufnahme
- 34, 34`: Lagerfuß
- 35: Lagereinrichtung
- 36: Verstellzapfen
- 38: Gleitstein
- 40: erstes Kugellager
- 42: zweites Kugellager
- 44: Lageraußenring
- 46: Lagerfläche
- 47: Kugeln
- 48: Lagerfläche
- 49: Kugeln
- 50: erste Lagerringnut
- 52: zweite Lagerringnut
- 53: Lagerinnenring
- 56, 56': Abrollfläche
- 58: Lagerinnring
- 60, 60': Abrollfläche
- 62: Stützaußenring
- 64: Abrollfläche

## Patentansprüche

1. Verstellpropeller-Anordnung für ein Luft-, Land- oder Wasserfahrzeug, mit einem Propeller (14, 14'), umfassend eine Propellernabe (28) und mindestens ein Propellerblatt (30), das zur Einstellung eines Einstellwinkels drehbar an der Propellernabe (28) gelagert ist, wobei das Propellerblatt (30) einen Lagerfuß (34, 34') umfasst und die Propellernabe (28) eine Lageraufnahme (32) für den Lagerfuß (34, 34') des Propellerblatts (30) umfasst, **dadurch gekennzeichnet, dass** sich der Lagerfuß (34, 34') des Propellerblatts (30) über ein erstes Kugellager (40) und ein gegenüber dem ersten Kugellager (40) axial versetztes zweites Kugellager (42) an der Propellernabe (28) abstützt, dass die Propellernabe (28) im Bereich der Lageraufnahme (32) aus einem Aluminiumwerkstoff gefertigt ist und dass die beiden Kugellager (40, 42) einen gemeinsamen Lageraußenring (44) haben, der in die Lageraufnahme (32) eingesetzt ist.

2. Verstellpropeller-Anordnung nach Anspruch 1, **dadurch gekennzeichnet, dass** der Lagerfuß (34) des Propellerblatts (30) aus einem Aluminiumwerkstoff gefertigt ist.

3. Verstellpropeller-Anordnung nach Anspruch 1 oder 2, **dadurch gekennzeichnet, dass** der Lagerfuß (34, 34') des Propellerblatts (30) eine erste Lagerringnut (50), in der sich das erste Kugellager (40) abstützt, und eine zweite Lagerringnut (52) umfasst, in der sich das zweite Kugellager (42) abstützt.

4. Verstellpropeller-Anordnung nach Anspruch 3, **dadurch gekennzeichnet, dass** in der ersten Lagerringnut (50) ein Lagerinnenring (54) des ersten Kugellagers (40) und in der zweiten Lagerringnut (52) ein Lagerinnenring (58) des zweiten Kugellagers (42) angeordnet ist.

5. Verstellpropeller-Anordnung nach Anspruch 4, **dadurch gekennzeichnet, dass** die Lagerinnenringe (54, 58) der beiden Kugellager (40, 42) jeweils mindestens zwei Ringsegmente (58-1, 58-2) umfassen.

6. Verstellpropeller-Anordnung nach Anspruch 3, **dadurch gekennzeichnet, dass** der Lagerfuß (34') einen gemeinsamen Lagerinnenring der beiden Kugellager (40, 42) bildet und die beiden Lagerringnuten (50, 52) jeweils eine Abrollfläche (56', 60') bilden, die insbesondere induktiv gehärtet ist.

7. Verstellpropeller-Anordnung nach einem der Ansprüche 1 bis 6, **dadurch gekennzeichnet, dass** das erste Kugellager (40) einen Stützaußenring (62) umfasst, der in die Lageraufnahme (32) eingesetzt ist.
